# FASCICULE DE BREVET EUROPEEN

(11) **EP 3 356 171 B1**
(45) Date de publication et mention de la délivrance du brevet: **14.02.2024**
(21) Numéro de dépôt: 16785249.0
(22) Date de dépôt: 29.09.2016
(51) Int. Cl.: F02D 41/20, H01F 7/18, H02J 7/14, B60L 58/20, F02D 41/40, F02N 11/08

(54) **PROCÉDÉ DE CONTRÔLE DE L'ALIMENTATION ÉLECTRIQUE D'INJECTEURS SOLÉNOÏDES DE CARBURANT DANS UN VÉHICULE AUTOMOBILE HYBRIDE**
STEUERVERFAHREN DER SPANNUNGSVERSORGUNG DER ELEKTROMAGNETISCHEN KRAFTSTOFFEINSPRITZDÜSEN IN EINEM HYBRIDKRAFTFAHRZEUG
CONTROL METHOD OF THE POWER SUPPLY OF SOLENOID FUEL INJECTORS IN A HYBRID MOTOR VEHICLE

(30) Priorité: 30.09.2015 FR 1559244
(43) Date de publication de la demande: 08.08.2018
(73) Titulaire: Vitesco Technologies GmbH, 93055 Regensburg (DE)
(72) Inventeur: LE-HUNG, Frédéric, 31170 Tournefeuille (FR)
(74) Mandataire: Vitesco Technologies
(86) Numéro de dépôt international: PCT/FR2016/052478
(87) Numéro de publication internationale: WO 2017/055751

(56) Documents cités:
- EP-A1- 2 083 159
- EP-A2- 1 876 340
- WO-A2-2014/207523
- DE-A1-102008 043 381
- DE-A1-102010 040 123
- DE-A1-102014 216 521

## Description

La présente invention a pour objet un procédé de contrôle de l'alimentation électrique d'injecteurs solénoïdes de carburant pour véhicule automobile hybride comportant d'une part un moteur propulsif à combustion interne et d'autre part un moteur électrique.

L'invention trouve des applications très avantageuses en ce qu'elle permet de se dispenser des étages élévateurs de tension nécessités dans les modes de réalisation de l'art antérieur.

Dans un véhicule automobile, hybride ou non, équipé d'un moteur propulsif à combustion interne dont les injecteurs de carburant sont de type solénoïdes, lesdits injecteurs solénoïdes sont alimentés sous une tension issue de la tension continue alimentant le véhicule automobile. Usuellement cette tension est fournie par la batterie dudit véhicule automobile et est de 12 V. Or une telle basse tension continue ne permet pas d'actionner les injecteurs de carburant solénoïdes. Il est alors utilisé un survolteur de tension continue qui élève la tension de 12 V à 65 V environ. Sur un moteur actuel à injection directe essence, la commande des injecteurs se fait ainsi au moyen d'une alimentation à découpage, généralement intégrée dans le calculateur de contrôle moteur.

Cette alimentation à découpage est coûteuse en prix mais également en volume occupé. Il est nécessaire d'intégrer dans le boîtier du calculateur de contrôle moteur de gros composants qui sont en outre source d'une grande puissance thermique dissipée lors de leur fonctionnement et il y a lieu de concevoir un boîtier électronique permettant d'évacuer toute cette énergie calorifique sans risque pour les autres composants du calculateur de contrôle moteur.

Les demandes DE 10 2008 043381 A1 et EP 1 876 340 A2 sont des exemples de l'art antérieur montrant un moteur hybride dont l'alimentation du moteur électrique est utilisée pour alimenter les injecteurs du moteur thermique.

La demande EP 2 083 159 A1 divulgue un procédé d'adaptation des paramètres de pilotage des injecteurs solénoïdes à partir de la tension de l'alimentation, du régime moteur, de la température du carburant et de la pression d'injection en amont des injecteurs solénoïdes.

L'objectif de l'invention est de se dispenser d'un tel survolteur de tension continue dans le cadre de véhicules hybrides dotés d'un moteur électrique qui possèdent un deuxième réseau électrique, alimenté à une tension plus élevée que 12 V mais néanmoins inférieure aux 65 V d'un survolteur de tension.

L'exemple illustratif choisi, nullement limitatif quant à la portée de l'invention, est celui d'un véhicule équipé d'un dispositif appelé « Mild-Hybrid » dans le jargon technique, c'est-à-dire un véhicule comportant un moteur propulsif à combustion interne et un moteur électrique non directement propulsif, destiné à assister le moteur propulsif à combustion interne. Le moteur électrique est chargé de récupérer de l'énergie dans les phases de décélération du véhicule afin de la transformer en électricité stockée dans des batteries d'accumulateurs. Cette énergie est ensuite restituée en assistance du moteur propulsif à combustion interne en cas de besoin, lors des phases de démarrage ou d'accélération par exemple.

Cet exemple de mode de réalisation n'exclut nullement que l'invention puisse être appliquée à un véhicule comportant deux moteurs propulsifs, également appelés « Full-Hybrid » en jargon technique.

Pour cela l'invention propose un procédé de contrôle de l'alimentation électrique d'injecteurs solénoïdes de carburant pour véhicule automobile hybride selon la revendication indépendante 1.

La Demanderesse a constaté que de manière surprenante et contrairement aux idées reçues, la tension d'alimentation du moteur électrique, typiquement une tension continue de 48 V actuellement, peut suffire à piloter des injecteurs solénoïdes de carburant en adaptant les paramètres d'injection à la tension réellement disponible. En effet, ladite tension de 48 V n'est pas constante et peut diminuer assez fortement en dessous de sa valeur nominale selon les phases de fonctionnement du moteur électrique qui font plus ou moins appel aux batteries d'accumulateurs embarquées et chargées de délivrer cette tension. L'invention propose donc judicieusement d'en tenir compte.

Selon l'invention, l'étape d'adaptation des paramètres de pilotage des injecteurs solénoïdes de carburant tient compte du régime moteur du moteur propulsif à combustion interne, de la température du moteur propulsif à combustion interne déduite de la température du liquide de refroidissement de ce dernier et de la pression d'injection en amont des injecteurs solénoïdes de carburant. Ainsi, afin d'optimiser encore l'adaptation des paramètres de pilotage des injecteurs solénoïdes, l'invention propose de non seulement tenir compte de la tension continue disponible mais également du régime moteur du moteur propulsif à combustion interne. En effet, un régime moteur élevé diminue beaucoup les temps d'injection de carburant possibles. De même, la température du moteur propulsif à combustion interne, typiquement celle du liquide de refroidissement de ce dernier, influe également sur les caractéristiques dudit moteur. Enfin, il est également important de déterminer en temps réel la pression en carburant en amont des injecteurs solénoïdes de carburant car cette dernière grandeur conditionne le débit de carburant injectable et donc les temps d'ouverture des injecteurs solénoïdes de carburant.

Dans un mode de réalisation, les paramètres de pilotage des injecteurs solénoïdes sont le temps d'injection de carburant et l'angle moteur de début d'injection de carburant.

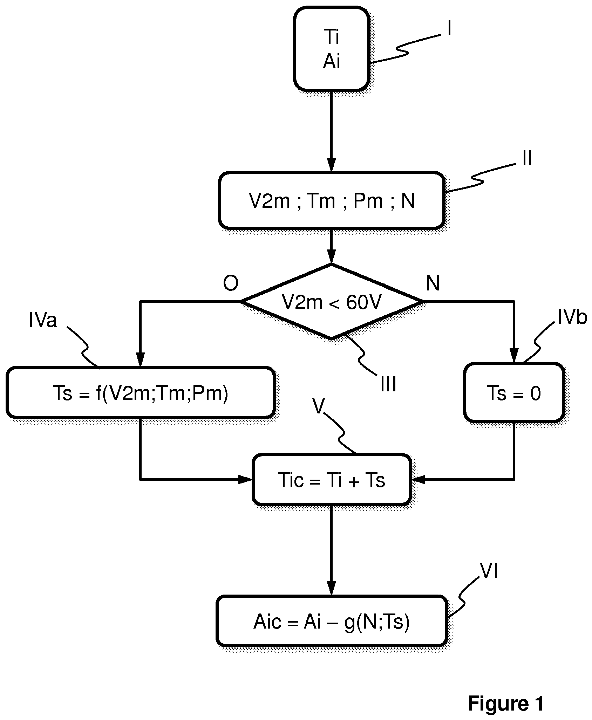

L'invention sera mieux comprise à la lecture de la description qui va suivre. Celle-ci est purement illustrative et doit être lue en regard des dessins annexés sur lesquels la **figure 1** montre un logigramme présentant les différentes étapes d'un procédé conforme à l'invention.

Il faut noter que la figure expose l'invention de manière détaillée pour mettre en oeuvre l'invention, ladite figure pouvant bien entendu servir à mieux définir l'invention le cas échéant.

Dans la description, les mêmes références numériques désignent des éléments identiques ou fonctionnellement semblables.

Le procédé selon l'invention met en oeuvre plusieurs composants matériels ou logiciels et plusieurs acteurs auxquels il sera fait référence dans la suite de la description.

Dans la description, on prête des actions à des appareils ou à des programmes ; cela signifie que ces actions sont exécutées par un microprocesseur de cet appareil ou de l'appareil comportant le programme, ledit microprocesseur étant alors commandé par des codes instructions enregistrés dans une mémoire de l'appareil. Ces codes instructions permettent de mettre en oeuvre les moyens de l'appareil et donc de réaliser l'action entreprise.

La **figure 1** montre un logigramme mis en oeuvre par un procédé de contrôle de l'alimentation électrique d'injecteurs solénoïdes de carburant pour véhicule automobile hybride comportant d'une part un moteur propulsif à combustion interne MCI et d'autre part un moteur électrique ME, ledit véhicule automobile hybride étant équipé d'un premier réseau électrique alimenté sous une première tension continue V1 et destinée notamment à alimenter le contrôle moteur du moteur propulsif à combustion interne MCI et d'un deuxième réseau électrique alimenté sous une deuxième tension continue V2, ladite deuxième tension continue V2 étant supérieure à la première tension continue V1 et destinée notamment à alimenter le moteur électrique ME.

A titre d'exemple illustratif, nullement limitatif en soi quant à la portée de l'invention, la première tension continue V1 est de 12 V et issue d'une batterie d'accumulateurs au plomb et la deuxième tension continue V2 est de 48 V et issue d'une batterie d'accumulateurs Lithium-ion.

Les paramètres que l'invention se propose d'adapter sont d'une part le temps d'injection Ti de carburant et d'autre part l'angle de début d'injection Ai (étape I).

En effet, si la tension est amenée à varier, puisque l'invention se propose de travailler avec la tension continue délivrée par la batterie d'accumulateurs alimentant le moteur électrique ME, il faut alors tenir compte du fait qu'un injecteur solénoïde de carburant va voir le temps de charge de son inductance varier avec la tension continue réellement appliquée. Pour un montage de l'art antérieur alimentant les injecteurs solénoïdes sous une tension connue et stabilisée cette prise en compte et adaptation ne s'impose pas.

L'invention propose donc de partir de réglages nominaux stockés en mémoire du calculateur de contrôle moteur, par exemple, et de les adapter en fonction de la tension mesurée en temps réel. Cette valeur de la deuxième tension continue V2 mesurée en temps réel est appelée deuxième tension continue disponible V2m.

A l'étape II, on mesure donc la deuxième tension continue disponible V2m ainsi que la température moteur Tm, la pression Pm en amont des injecteurs solénoïdes et le régime moteur N.

La température moteur Tm est déduite de la température du liquide de refroidissement du moteur propulsif à combustion interne MCI qui est habituellement un paramètre suivi par les calculateurs de contrôle moteur et ne nécessite donc pas l'adjonction d'un capteur supplémentaire. Ce paramètre influe sur la qualité de la combustion dans les cylindres et peut amener à corriger les paramètres d'injection retenues.

La pression Pm en amont des injecteurs solénoïdes est également importante à suivre car le débit des injecteurs solénoïdes, et donc le volume injecté pour un temps d'ouverture d'injecteur solénoïde donné, peut fluctuer. Sur les moteurs modernes à injection directe, cette pression Pm est suivie et il n'y a donc pas lieu ici non plus d'ajouter un capteur à ceux existants.

Le régime moteur N est également important car il influe sur le temps disponible pour effectuer les injections. Il fait partie des grandeurs de base suivies dans un calculateur de contrôle moteur.

Il est donc possible, en utilisant des grandeurs disponibles et suivies par le calculateur de contrôle moteur, d'avoir une vision précise des conditions de fonctionnement du moteur propulsif à combustion interne MCI peu de temps avant que l'injecteur solénoïde soit activé.

A l'étape III une évaluation de la deuxième tension continue disponible V2m est faite en la comparant à un seuil. Dans l'exemple illustré où les injecteurs solénoïdes ont une tension nominale de commande de 65 V, la valeur seuil est de 60 V.

Si la deuxième tension continue disponible V2m est supérieure ou égale à ce seuil de 60 V, alors aucune correction des paramètres d'injection n'est nécessaire. Le temps de compensation Ts est fixé à zéro à l'étape IVb, de telle sorte que le temps d'injection corrigé Tic défini à l'étape V par : Tic = Ti + Ts est identique au temps d'injection Ti initial.

Si la deuxième tension continue disponible V2m est inférieure à ce seuil de 60 V, alors une correction des paramètres d'injection est nécessaire. Le temps de compensation Ts est calculé en tenant compte des facteurs influants mesurés précédemment, c'est-à-dire de la température moteur Tm, la pression Pm en amont des injecteurs solénoïdes et le régime moteur N (étape IVa). Ce facteur correctif qu'est le temps de compensation Ts est noté Ts = f(V2m ; Tm ; Pm). Le temps d'injection corrigé Tic défini à l'étape V par : Tic = Ti + Ts est alors établi.

L'étape VI permet le calcul de l'angle de début d'injection corrigé Aic, défini à partir de l'angle de début d'injection Ai établi à l'étape I, diminué d'un facteur correctif qui dépend du temps de compensation Ts et du régime moteur N, noté g (N ; Ts).

Ces facteurs correctifs peuvent être établis à partir de lois de calcul ou bien d'abaques établis pour chaque type de moteur durant des campagnes d'essais.

Les deux paramètres corrigés, c'est-à-dire le temps d'injection corrigé Tic et l'angle de début d'injection corrigé Aic sont alors utilisés par le calculateur de contrôle moteur du moteur propulsif à combustion interne MCI afin de superviser l'alimentation électrique des injecteurs solénoïdes, directement alimentés par la deuxième tension continue V2.

Dans une variante avantageuse, dans le cas d'un moteur propulsif à combustion interne MCI comportant des stratégies d'injections multiples de carburant par cylindre au sein d'un même cycle de fonctionnement, il est proposé d'introduire un test de cohérence afin de déterminer si le nombre d'injections multiples envisagé est possible ou non.

Si le test de cohérence des paramètres de pilotage adaptés est satisfaisant, c'est-à-dire si la durée totale d'injection établie est compatible avec le temps imparti par les conditions de fonctionnement du moteur propulsif à combustion interne MCI, alors on maintient le nombre d'injections multiples prévues.

Si le test de cohérence des paramètres de pilotage adaptés n'est pas satisfaisant, c'est-à-dire si la durée totale d'injection établie est supérieure au temps imparti par les conditions de fonctionnement du moteur propulsif à combustion interne MCI, alors on réduit le nombre d'injections multiples prévues, quitte à le restreindre à une seule injection dans la situation la plus défavorable.

Il est à noter que l'invention peut aisément être adaptée à d'autres actuateurs au sein du véhicule automobile que les seuls injecteurs solénoïdes décrits précédemment, sans pour autant sortir de la portée de la présente invention.

Il est également à noter que l'invention ne s'applique pas telle que décrite à un cas de figure dans lequel la deuxième tension continue V2 est très supérieure à la tension maximale admissible par les injecteurs solénoïdes (cas de moteurs électriques alimentés sous une tension de 400 V par exemple). Dans un tel cas de figure il y aurait lieu de prévoir un dispositif abaisseur de tension si la deuxième tension continue V2 présente le risque de détérioration des injecteurs solénoïdes.

## Revendications

1. Procédé de contrôle de l'alimentation électrique d'injecteurs solénoïdes de carburant pour véhicule automobile hybride comportant d'une part un moteur propulsif à combustion interne (MCI) et d'autre part un moteur électrique (ME), ledit véhicule automobile hybride étant équipé d'un premier réseau électrique alimenté sous une première tension continue (V1) et destinée notamment à alimenter un contrôle moteur du moteur propulsif à combustion interne (MCI) et d'un deuxième réseau électrique alimenté sous une deuxième tension continue (V2), ladite deuxième tension continue (V2) étant supérieure à la première tension continue (V1) et destinée notamment à alimenter le moteur électrique (ME), ledit procédé comporte les étapes suivantes :
i. Connexion de la deuxième tension continue (V2) à l'alimentation électrique des injecteurs solénoïdes de carburant,
ii. Lecture de la valeur de la deuxième tension continue (V2m), et lecture d'un régime moteur (N) du moteur propulsif à combustion interne (MCI), la lecture d'une température d'un liquide de refroidissement du moteur propulsif à combustion interne représentative d'une température (Tm) dudit moteur propulsif à combustion interne (MCI), et la lecture d'une pression d'injection (Pm) en amont des injecteurs solénoïdes de carburant,
iii. Adaptation des paramètres de pilotage des injecteurs solénoïdes de carburant à partir de la valeur (V2m) lue à l'étape ii, d'un régime moteur (N) du moteur propulsif à combustion interne (MCI), de la température (Tm) du moteur propulsif à combustion interne (MCI) déduite de la température lue du liquide de refroidissement du moteur propulsif à combustion interne (MCI) et de la pression d'injection (Pm) en amont des injecteurs solénoïdes de carburant,
iv. Pilotage des injecteurs solénoïdes de carburant au moyen de la deuxième tension continue (V2) avec :
iv.a. aucune modification des paramètres de pilotage des injecteurs dans le cas où la valeur (V2m) est supérieure à une valeur seuil, et
iv.b. modification d'au moins un des paramètres de pilotage des injecteurs dans le cas où la valeur (V2m) est inférieure à la valeur seuil.

2. Procédé selon la revendication 1, dans lequel les paramètres de pilotage des injecteurs solénoïdes sont le temps d'injection (Ti) de carburant et l'angle moteur de début d'injection (Ai) de carburant.

## Patentansprüche

1. Verfahren zur Steuerung der Stromversorgung elektromagnetischer Kraftstoffeinspritzdüsen für ein Hybridkraftfahrzeug, das einerseits einen Antriebsverbrennungsmotor (MCI) und andererseits einen Elektromotor (ME) aufweist,
wobei das Hybridkraftfahrzeug mit einem ersten Stromnetz ausgestattet ist, das mit einer ersten Gleichspannung (V1) gespeist wird und insbesondere dazu bestimmt ist, eine Motorsteuerung des Antriebsverbrennungsmotors (MCI) zu speisen, und mit einem zweiten Stromnetz, das mit einer zweiten Gleichspannung (V2) gespeist wird, wobei die zweite Gleichspannung (V2) höher als die erste Gleichspannung (V1) ist und insbesondere dazu bestimmt ist, den Elektromotor (ME) zu speisen, wobei das Verfahren die folgenden Schritte umfasst:
i. Anschließen der zweiten Gleichspannung (V2) an die Stromversorgung der elektromagnetischen Kraftstoffeinspritzdüsen,
ii. Lesen des Wertes der zweiten Gleichspannung (V2m) und Lesen einer Motordrehzahl (N) des Antriebsverbrennungsmotors (MCI), Lesen einer Temperatur einer Kühlflüssigkeit des Antriebsverbrennungsmotors, die für eine Temperatur (Tm) des Antriebsverbrennungsmotors (MCI) repräsentativ ist, und Lesen eines Einspritzdrucks (Pm) stromaufwärts der elektromagnetischen Kraftstoffeinspritzdüsen,
iii. Anpassen der Steuerungsparameter der elektromagnetischen Kraftstoffeinspritzdüsen anhand des in Schritt ii gelesenen Wertes (V2m), einer Motordrehzahl (N) des Antriebsverbrennungsmotors (MCI), der Temperatur (Tm) des Antriebsverbrennungsmotors (MCI), die von der gelesenen Temperatur der Kühlflüssigkeit des Antriebsverbrennungsmotors (MCI) abgeleitet wurde, und des Einspritzdrucks (Pm) stromaufwärts der elektromagnetischen Kraftstoffeinspritzdüsen,
iv. Steuern der elektromagnetischen Kraftstoffeinspritzdüse mittels der zweiten Gleichspannung (V2) mit:
keiner Änderung der Steuerungsparameter der Einspritzdüsen, falls der Wert (V2m) größer als ein Schwellenwert ist, und
Änderung mindestens eines der Steuerungsparameter der Einspritzdüsen, falls der Wert (V2m) kleiner als der Schwellenwert ist.

2. Verfahren nach Anspruch 1, wobei die Steuerungsparameter der elektromagnetischen Einspritzdüsen die Kraftstoffeinspritzdauer (Ti) und der Motorwinkel zu Beginn der Kraftstoffeinspritzung (Ai) sind.

## Claims

1. Method for controlling the electrical power supply of solenoid fuel injectors for a hybrid motor vehicle comprising on the one hand an internal combustion propulsion engine (MCI) and on the other hand an electric motor (ME),
said hybrid motor vehicle being equipped with a first electrical network powered under a first DC voltage (V1) and in particular intended to power an engine controller of the internal combustion propulsion engine (MCI) and with a second electrical network powered under a second DC voltage (V2), said second DC voltage (V2) being higher than the first DC voltage (V1) and in particular intended to power the electric motor (ME), said method comprises the following steps:
i. connecting the second DC voltage (V2) to the electrical power supply of the solenoid fuel injectors,
ii. reading the value of the second DC voltage (V2m), and reading an engine speed (N) of the internal combustion propulsion engine (MCI), reading a temperature of a coolant of the internal combustion propulsion engine representative of a temperature (Tm) of said internal combustion propulsion engine (MCI), and reading an injection pressure (Pm) upstream of the solenoid fuel injectors,
iii. adapting drive parameters of the solenoid fuel injectors on the basis of the value (V2m) read in step ii, of an engine speed (N) of the internal combustion propulsion engine (MCI), of the temperature (Tm) of the internal combustion propulsion engine (MCI) deduced from the read temperature of the coolant of the internal combustion propulsion engine (MCI) and of the injection pressure (Pm) upstream of the solenoid fuel injectors,
iv. driving the solenoid fuel injectors by means of the second DC voltage (V2) with:
iv.a. no modification of the drive parameters of the injectors in the case where the value (V2m) is higher than a threshold value, and
iv.b. modification of at least one of the drive parameters of the injectors in the case where the value (V2m) is lower than the threshold value.

2. Method according to Claim 1, wherein the drive parameters of the solenoid injectors are the fuel injection time (Ti) and the engine angle (Ai) at the start of fuel injection.
